# EUROPEAN PATENT APPLICATION

(11) **EP 2 469 755 A1**
(43) Date of publication of application: **27.06.2012**
(21) Application number: 10252206.7
(22) Date of filing: 23.12.2010
(51) Int. Cl.: H04L 12/18

(54) **Video communication system**

(71) Applicant: British Telecommunications public limited company, London EC1A 7AJ (GB)
(72) Inventor: The designation of the inventor has not yet been filed
(74) Representative: Cardus, Alan Peter

(57) **Abstract**

A system for initiating, by means of an IM session, a video conference between a plurality of participants which may be IM or non-IM based. A video conference may be requested by means of an IM request message from an IM client received at a video conference controller. The video conference controller responds to the request in an IM session with the IM client from which the request was received and by requesting from the user, via the IM session, information identifying at least one other client associated with another user that is to be invited to take part in the video conference. Once the video conference controller has received the requested information, the video conference is initiated by extending, in each of a set of video calls to the IM client and clients of identified users, an invitation to take part in the video conference.

## Description

The invention relates to a method and system for initiating a video conference. Video conferencing is used here to denote video-based communications between two or more participants.

Instant messaging is a form of real-time text-based communication, normally combined with presence, between two or more people. Unified Communications (UC) solutions exist which combine instant messaging (IM) and presence with voice and video. Non-IM video conferencing may involve video phones or mobile camera systems which use communication protocols such as SIP or H.323 to establish video calls. The video in such systems may, typically, be provided via a web cam on a laptop or other computer, although higher-quality video may also be supported. Advantageously, such solutions provide video conferencing on an ad-hoc basis irrespective of location (i.e. wherever the person happens to be - at the office, at home or another location) without the need to attend a special-purpose video conferencing facility.

While instant-messaging systems which have a video communication capability provide a way of enabling many users (for example all IM users within a company) to use video conferencing, they do not typically support video communication with other video systems which are not based on instant messaging.

### Statement of Invention

The present invention provides a system for initiating, by means of an IM session, a video conference between a plurality of participants which may be IM or non-IM based.

According to the present invention, a video conference may be requested by means of an IM request message (or event) from an IM client received at a video conference controller. The video conference controller responds to the request in an IM session with the IM client from which the request was received and by requesting from the user, via the IM session, information identifying at least one other client associated with another user that is to be invited to take part in the video conference. Once the video conference controller has received the requested information, the video conference is initiated by extending, in each of a set of video calls to the IM client and the other identified clients, an invitation to take part in the video conference.

The setting up of a video conference by a user at an IM client is simplified for the user by prompting the user for the required details and then setting up a video conference on behalf of the user. The user is thereby freed from having to deal with the complexities of video conference set-up. In a preferred embodiment, the prompting takes place in a conversation with the user.

Preferably, the video conference is initiated by participating via the IM session in a conversation with the user, for example, such that each request and response and the receipt of information take place within the conversation with the user. In this way, the task of the user is simplified and non-expert users may be guided through the video conference setup process. According to a preferred embodiment, the conversation with the user is carried out by an application, such as a Bot.

The setting up of a video conference may be further simplified for the user by presenting a web page to the Bot to allow the user to query a directory comprising contact details of other users. The setting up of a video conference may be further simplified for the user by presenting a web page to the Bot to allow the user to manipulate a video interoperation controller to set up the video conference. Advantageously, the user is not presented with a web page but interacts with a video conference controller via an IM conversation through the intermediary of the Bot. Other aspects of the invention are as set out in the attached claims.

### Brief Description of the Drawings

Embodiments of the present invention will now be described, by way of example, with reference to the accompanying drawings in which:
Figures 1 and 4 show in block diagram form features of a network of the present invention;
Figure 2 shows a screenshot typical of operation according to the present invention;
Figures 3a and 3b show an example of a typical IM conversation according to the present invention.

### Description of Preferred Embodiments

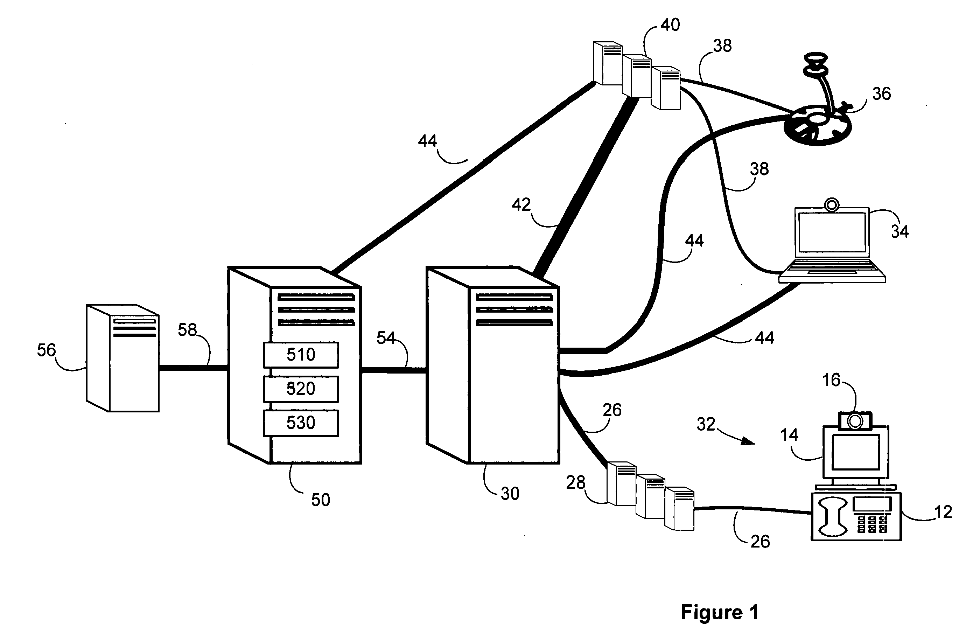

A preferred embodiment will now be described with reference to Figure 1. According to a preferred embodiment, users are able to initiate a video conference on video conference interoperation controller 30 and interoperate, as required, with other users at IM enabled terminals 34, 36 and non-IM enabled terminals 32. Advantageously, users are able to initiate a video conference using simple IM conversation, rather than a complex web-based interface.

Figure 1 shows a plurality of video conference-enabled terminals 32, 34, 36, comprising IM enabled terminals 34, 36 and non-IM enabled terminals 32, which can communicate with video conference interoperation controller 30, which may comprise a single, physical server. IM enabled terminals 34, 36 are connected for IM communication with video conference interoperation controller 30 via IM server 40. Non-IM enabled terminals 32 are connected for non-IM communication with video conference interoperation controller 30 via H.323 gatekeeper 28.

A connection between video conference interoperation controller 30 and conference control middleware server 50 (which together control the video conferences) is provided over IP data link 54 over which signalling is carried using CCCP. A connection between hardware conference control middleware server 50 and database corporate directory 56 is provided via IP data link 58. A middleware application running on conference control middleware server 50 has visibility, through a Lightweight Directory Access Protocol (LDAP) interface, of corporate directory 56 (e.g. Microsoft Active Directory), which holds details, including contact details, of potential video conference participants.

IM-enabled devices 34, 36 may comprise Microsoft Office Communicator (MOC) IM clients operating on laptops represented at 34 or more sophisticated video conferencing equipment represented at 36 and served by a MOC server pool 40 consisting of either a single OCS Standard Edition server, or of one or more OCS Enterprise Edition front-end servers with corresponding back-end servers. IM-enabled devices 34, 36 may be video-enabled with webcams or other more sophisticated video capture devices, such as a Polycom CX5000. According to this example, IM-enabled devices 34, 36 register with IM server 40 using SIP, or SIP over Transport Layer Security (TLS), over IP links 38. Alternatively, IM-enabled devices 34 may be running a softphone application (such as the CounterPath Multimedia Communicator or the open source SIP Communicator) or other form of SIP user agent or H.323 application on a laptop or equivalent. As an alternative to the laptop, the above applications may be run on another form of computing device such as a desktop computer, PDA or smartphone.

SIP trunk 42 provides a signalling conduit between IM server 40 and video conference interoperation controller 30 to enable video conference interoperation controller 30 to communicate with further users 34, 36 via IM server 40. IP links 44, typically provided by an IP network, provide IP-based communication links between conference control middleware server 50 and IM server 40 and between video conference interoperation controller 30 and IM enabled terminals 34, 36.

Non-IM-enabled terminals 32 may be based on laptops or similar networked terminals 14 provided with video input device 16 and communicating other than by IM, e.g. using H.323 or SIP. Non-IM-enabled terminals 32 may comprise, for example, an IP phone 12, of any level of sophistication ranging from quite simple to smartphone or another form of computing device such as a desktop computer or PDA. Calls via H.323 gatekeeper 28 conform to ITU-T H.323 and may be transported over IP links 26, which may form part of a network such as the Internet.

To set up a video conference, video conference interoperation controller 30 may place outbound video calls to IM terminals 34, 36 via a SIP proxy (e.g. IM server 40) to invite users at IM terminals 34, 36 to join the video conference. This enables users at IM-enabled terminals 34, 36 that have SIP addresses routable from IM server 40 to be invited via an IM message (SIP Invite) to a video conference running on video conference interoperation controller 30. Video conference interoperation controller 30 may place outbound video calls to non-IM terminals 32 via H.323 gatekeeper 28 to invite users at non-IM terminals 32 to join the video conference.

Video conference interoperation controller 30 may have an XML-based programmatic interface which initiates, tears-down and manages conferences running on it using a form of Centralized Conferencing Control Protocol (CCCP), as defined by the IETF in draft-levin-xcon-cccp-04. According to an embodiment of the invention, the XML interface is exploited in a middleware application running on conference control middleware server 50 in order to control conferences running on video conference interoperation controller 30 and to add or remove conference participants. The application running on server 50 can be termed "middleware" as it connects and arbitrates between applications (i.e. the IM server 40 with IM clients 34, 36; and interoperation controller 30). Significantly, the application adds a layer of logic which guides users on IM clients 34 or 36 through the process of setting up a video conference.

According to a preferred embodiment, the conference control middleware comprises three components on conference control middleware server 50, as follows:
1. Bot 510 acts as an IM client and may use unified communications managed API (UCMA). Bot 510 takes control via conference control web server 530 (see below) of video conference interoperation controller 30 to make outgoing connections to video conference participants, such as terminals 32, 34, 36;
2. A web server (presence web-server 520) associated with Bot 510 which responds to presence requests;
3. A web server (conference control web server 530) associated with video conference interoperation controller 30 which presents to Bot 510 web pages allowing corporate directory 56 to be queried by a user, and interoperation controller 30 to be manipulated by a user. Advantageously, the use is not presented with a web page but interacts with the video conference controller via an IM conversation through the intermediary of Bot 510.

Users using IM clients 34 or 36 can access the conference control middleware by initiating an IM conversation with Bot 510, which forms part of that middleware, to seamlessly add and remove further users from the video conference.

We now have a model wherein users at IM clients 34, 36 may use an IM conversation with Bot 510 to drive the middleware application running on conference control middleware server 50, which in turn uses CCCP to control video conference interoperation controller 30 and create video conferences on it and to add or remove further participants.

According to a preferred embodiment, conference control middleware server 50 runs Bot 510 for communicating with users of terminals wishing to set up a video conference. For example, a user at IM terminal 34 may request a video conference in an IM communication (instant message) sent via IM server 40 to conference control middleware server 50. The video conference request instant message, which is received at conference control middleware server 50, identifies the IM user by their IM address (a SIP address). On IM terminal 34, the video conference and IM are, preferably, handled by the same software client, which we shall refer to as a video conference-enabled IM client. The non-IM client, can be any form of video conference-enabled client that communicates (or is communicating for the purposes of the video conference) other than by IM.

When Bot 510 starts operation, it contacts IM server 40 and identifies itself to the IM server by means of a pre-configured globally routable user-agent URI (GRUU) which is a specially generated SIP address as defined in IETF RFC 5627. Bot 510 registers itself with IM server 40 as "online" and able to receive IM messages.

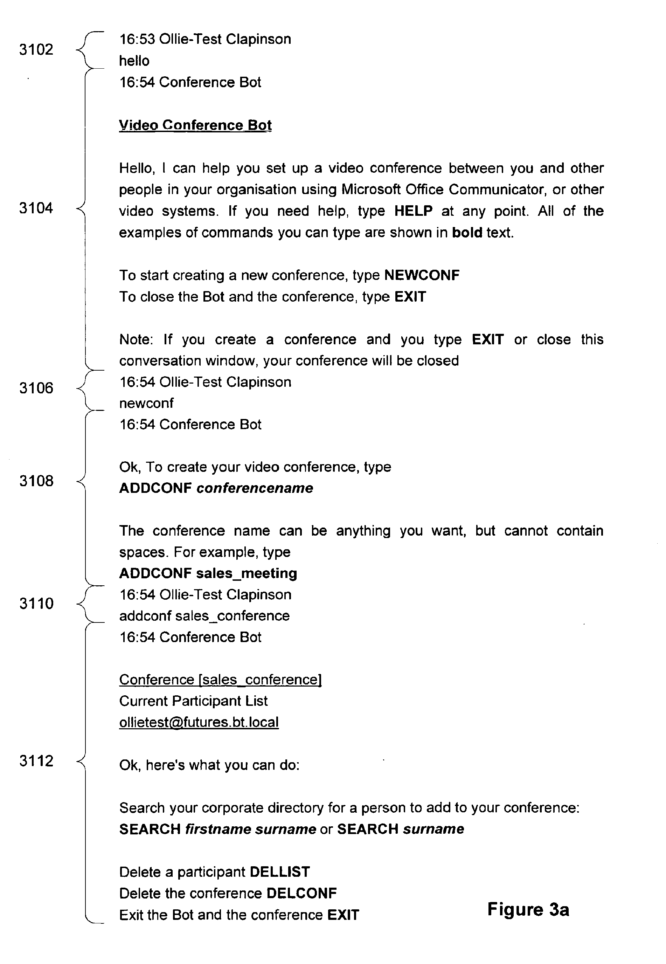

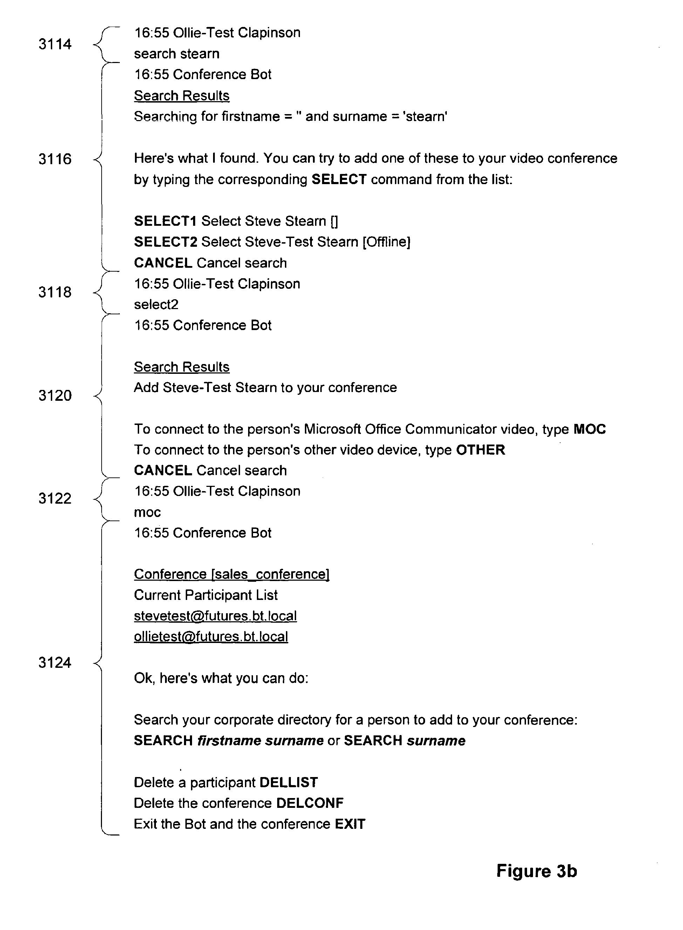

A typical message exchange between Bot 510 and a user at an IM terminal 34, 36 (an "IM-user") is shown in Figures 3a and 3b. At 3102, the user initiates an IM session with Bot 510. Bot 510 responds to the user with a welcome message 3104 setting out for the user the options available and prompting the user to indicate their selected option. At this stage, the options available include (a) start creating a new conference and (b) close the Bot and the conference. Bot 510 stores in its internal database (not shown) the unique message ID of the video conference request instant message and the user's IM (SIP) address. As shown at 3106, when the user indicates they want to start creating a video conference, Bot 510 responds at 3108 by prompting the user on how the user can request a video conference. At 3110, the user requests a video conference in accordance with the guidance provided by Bot 510 at 3108.

To set up the video conference, Bot 510 makes a request (outside of the message exchange of Figure 3a) to conference control web server 530 for a new conference to be created. Conference control web server 530 uses CCCP to instruct video conference interoperation controller 30 to create the video conference. Video conference interoperation controller 30 returns a unique conference ID, which is then provided to Bot 510. Bot 510 makes an additional request to conference control web server 530, that the initiating IM user be joined to the newly created conference. Again, CCCP is used to send this instruction to video conference interoperation controller 30. Video conference interoperation controller 30 places an outbound video call to the initiating IM user, who is joined to the video conference (as the first participant).

At 3112, Bot 510 responds to the request from the user for a video conference and prompts the user to select a participant for the video conference. As shown in Figure 3b, when the video conference-initiating user wants to add a new participant to the video conference, they respond 3114, 3118, 3122 to IM conversation prompts 3112, 3116, 3120 received from Bot 510.

In more detail, when Bot 510 receives a request 3114 to add a new participant to the video conference, i.e. in the course of the IM-conversation, Bot 510 initiates, via conference control web server 530, a search in corporate directory 56 for the name of the new participant. According to a preferred embodiment, corporate directory 56 stores up to two attributes per entry (e.g. per user name) relating to contact details: a user's SIP address and one further attribute, e.g. a user's H.323 phone number.

The search of corporate directory 56 is initiated by Bot 510 sending the name searched for as a parameter to conference control web server 530. Conference control web server 530 retrieves search results from corporate directory 56. The search results may comprise one or more of a user SIP address and a user H.323 phone number. It may submit these results to presence web server 520 to acquire information on the presence status of SIP users searched for. The results of these searches are all returned to Bot 510. Bot 510 relays those results to the IM user as text 3116 in the IM conversation. The IM user then selects 3118 a user from the information provided as part of the conversation. On receiving the user's selection 3118, Bot 510 may offer the user, as shown at 3120, a choice of connection modes (such as Microsoft Office Communicator, or another access mode such as H.323). The user responds, as shown at 3122, by selecting an appropriate connection mode and, by so doing, implicitly confirms their request.

Bot 510 responds to the confirmed request to add a participant by sending the SIP address or H323 address of the intended participant to conference control web server 530. Conference control web server 530 uses CCCP instructions to instruct video conference interoperation controller 30 to place outgoing video calls to the SIP or H323 address of the new participant. If the called participant answers the call they are joined to the video conference. When the requested participant has joined the video conference, Bot 510 informs, in further instant message 3124, the user who initiated the video conference. In further instant message 3124, Bot 510 also provides the user with prompts for further action including adding another participant, deleting an existing participant, deleting the conference, exiting the Bot and the conference.

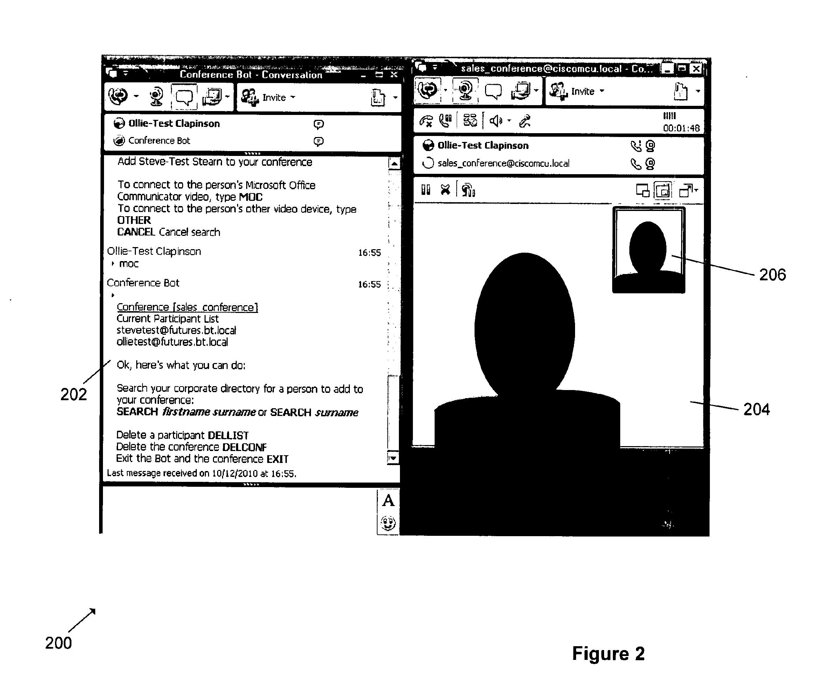

Figure 2 shows a screenshot 200 of the display at the initiating user's terminal during setting up a video conference. To the left of the display, part of the IM conversation of Figures 3a and 3b with Bot 510 is listed in first window 202 (only part of the text is displayed in the Figure due to the limited size of the window). The actual video conference call is shown in a second window 204 to the right of the display: the distant user shown in a larger image with a smaller image 206 of the local user inserted top right. In circumstances where one or other terminal does not have a video input device, the video conference window may be partially or wholly blank. Where more than two users are participating in a video conference, the right-hand window may be divided, as appropriate, to show all participants.

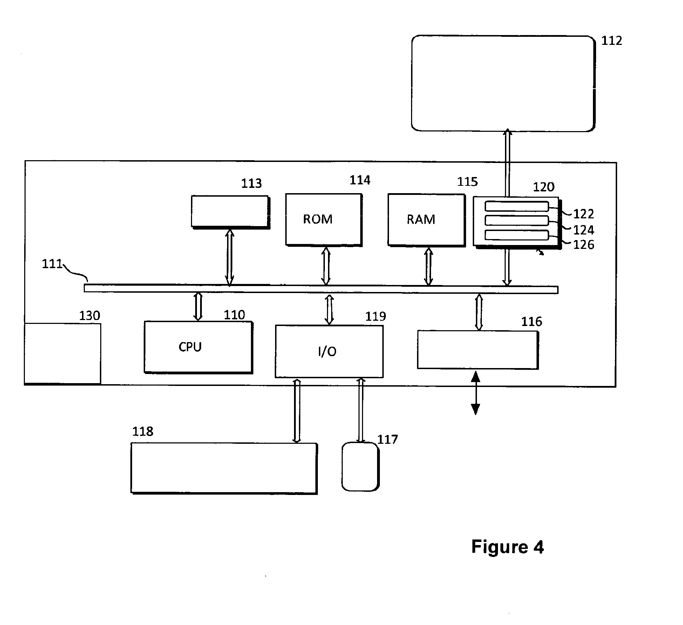

A typical architecture for a computer apparatus on which software implementing the invention can be run, is shown in Figure 4. Each computer apparatus comprises a central processing unit (CPU) 110 for executing computer apparatus programs and managing and controlling the operation of the computer apparatus. The CPU 110 is connected to via a bus 111 to a variety of devices including solid-state memory devices including non-volatile ROM 114, volatile RAM 115 and non-volatile data storage means. The non volatile data storage means may comprise one or more hard disc drives 120; in addition there may be provided removable non volatile data storage means (not shown), such as removable hard disc drives or optical media (for example re-writable or recordable DVDs) and.

The computer apparatus further includes one or more network interface 116 (one shown) for interfacing to and exchanging data via one or more network (not shown) such as an IP network underpinning the various IP connections shown in Figure 1. The network interface(s) may be a local area network (LAN) adaptor connecting to a LAN. The LAN may itself be connected to other LANs and wide area networks (WANs) to enable the apparatus to communicate with and exchange data with other computer apparatuses. Alternatively, the network interface may be a DSL modem, or similar, that provides a connection to a WAN, such as the internet or an intranet, which enables communications with further networks.

The computer apparatus can also, optionally, include user input/output devices such as a mouse 117 and keyboard 118 connected to the bus 111 via input/output port 119, as well as a display 112. The computer apparatus is powered by power supply unit 130, typically obtaining power from an external power grid or internal battery (not shown). The skilled person will understand that this architecture is not limiting, but is merely an example of typical computer apparatus architecture. The computer apparatus may also be a distributed system, comprising a number of computer apparatuses communicating through respective interface ports 116 such that a user may access program and other data stored on a remote computer apparatus.

Non-volatile data storage means 120 comprises an operating system 122 and may comprise one or more application programs 124. Operating system 122 comprises the software that the computing apparatus requires to operate, communicate with other computer apparatuses, receive input from users, display outputs and results to users, etc. Application programs 124 can be executed by the apparatus in order to provide additional functionality. Non volatile data storage means 120 further comprises computer apparatus code 126 which can be executed in order to perform a method according to the present invention, for example such as the one described above and illustrated in the drawings. It will be understood that computer apparatus code 126 may comprise a single integrated application or a number of different modules that are accessed separately to execute a method according to the present invention. Each module may perform the functionality of one or more of the processes (for example Bot 510, presence web-server 520 and conference control web server 530), which comprise the present invention.

The above embodiments are to be understood as illustrative examples of the invention. It is to be understood that any feature described in relation to any one embodiment may be used alone, or in combination with other features described, and may also be used in combination with one or more features of another of the embodiments, or any combination of the embodiments. Further embodiments of the invention are envisaged and will be evident to the skilled reader. Furthermore, equivalents and modifications not described above may also be employed without departing from the scope of the invention, which is defined in the accompanying claims.

As will be understood by those skilled in the art, the invention may be implemented in computer program product software, any or all of which may be contained on various storage media so that the program can be loaded onto one or more computing devices (such as shown in Figure 4) or could be downloaded over a computer network using a suitable transmission medium. The computer program product software used to implement the invention may be embodied on any suitable carrier, readable by a suitable computer input device (not shown), such computer program product comprising optically, magnetically or otherwise readable marks.

## Claims

1. A method of initiating a video conference between a plurality of participants, the method including:
receiving in an IM communication from an IM client, a request from a user to set up the video conference;
responding to the request in an IM session with the IM client from which the request was received;
requesting from the user, via the IM session, information identifying at least one other client associated with another user that is to be invited to take part in the video conference;
receiving from the user, via the IM session, information identifying the at least one other client; and
extending, in each of a set of video calls to the IM client and the identified at least one other client, an invitation to take part in the video conference.

2. A method as claimed in claim 1 including participating via the IM session in a conversation with the user.

3. A method as claimed in claim 2 in which each request and response and the receipt of information take place within the conversation with the user.

4. A method as claimed in any of claims 1 to 3 including presenting at least one web page allowing a directory comprising contact details of users to be queried by the user.

5. A method as claimed in any of claims 1 to 4 including presenting at least one web page allowing a video interoperation controller to be manipulated by the user to set up a video conference.

6. A method as claimed in any of claims 1 to 5 in which the at least one other client comprises at least one non-IM client.

7. A computer readable storage medium containing executable computer program code which, when executed by a computer system causes the system to perform the process of any of claims 1 to 6.

8. A video conference system comprising a video conference controller configured to:
receive in an IM communication from an IM client, a request from a user to set up a video conference;
respond to the request in an IM session with the IM client;
request from the user, via the IM session, information identifying at least one other client associated with at least one other user that is to be invited to take part in the video conference;
receive from the IM client via the IM session, the requested information; and
extend, in each of a set of video calls to the IM client and the at least one other client, an invitation to take part in the video conference.

9. The video conference system as claimed in claim 8 in which the video conference controller comprises an application configured to participate via the IM session in a conversation with the user.

10. The video conference system as claimed in claim 9 in which each request and response and the receipt of information take place within the conversation with the user.

11. The video conference system as claimed in any of claims 9 to 10 in which the application is a Bot.

12. The video conference system as claimed in any of claims 9 to 11 in which the video conference controller comprises a web server configured to present to the application at least one web page allowing a directory comprising contact details of users to be queried by the user.

13. The video conference system as claimed in any of claims 9 to 12 in which the video conference controller comprises a web server configured to present to the application at least one web page allowing a video interoperation controller to be manipulated by the user to set up a video conference.

14. The video conference system as claimed in any of claims 8 to 13 in which the at least one other client comprises at least one non-IM client.
